(19) **Europäisches Patentamt / European Patent Office / Office européen des brevets**

(11) **EP 3 085 435 A1**

(12) **EUROPEAN PATENT APPLICATION**
published in accordance with Art. 153(4) EPC

(43) Date of publication:
26.10.2016 Bulletin 2016/43

(51) Int Cl.:
*B01D 71/56* (2006.01)  *B01D 71/62* (2006.01)
*B01D 71/64* (2006.01)  *B01D 71/68* (2006.01)
*C08J 5/18* (2006.01)

(21) Application number: 14871040.3

(22) Date of filing: 11.06.2014

(86) International application number:
**PCT/JP2014/065456**

(87) International publication number:
**WO 2015/093080 (25.06.2015 Gazette 2015/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.12.2013 PCT/JP2013/083557**

(71) Applicant: **Toray Industries, Inc.**
**Tokyo 103-8666 (JP)**

(72) Inventors:
• **TOKUYAMA, Takahiro**
**Otsu-shi**
**Shiga 520-8558 (JP)**
• **TOMIOKA, Hiroki**
**Otsu-shi**
**Shiga 520-8558 (JP)**

(74) Representative: **Hoefer & Partner Patentanwälte mbB**
**Pilgersheimer Straße 20**
**81543 München (DE)**

(54) **SEMIPERMEABLE MEMBRANE MANUFACTURING METHOD AND SEMIPERMEABLE MEMBRANE**

(57) Provided is a production process for a semipermeable membrane having both semipermeability and strength and also provided is the semipermeable membrane. The process comprises the step of forming a liquid membrane from a membrane-forming solution comprising materials (A) to (C),
material (A) being a polymer having a repeating unit structure comprising one or more kinds of structural moieties selected from the group consisting of an amide group, an imide group, a sulfonyl group, and a heterocyclic ring,
material (B) being a good solvent for material (A),
material (C) being a salt, and
the step of removing the solvent from the liquid membrane.

EP 3 085 435 A1

**Description**

Technical Field

The present invention relates to a semipermeable membrane having both excellent semipermeability and sufficient strength and to a production process thereof.

Background Art

Most of reverse osmosis membranes and forward osmosis membranes currently used are composite membranes and asymmetric membranes. Composite membranes and asymmetric membranes have two layers of a separation functional layer and a support layer. The separation functional layer bears substantial separation function. The support layer has a high physical strength, and provides the whole membrane with strength high enough to withstand a pressurized water permeability test.

In a composite membrane, the support layer has either or both of a porous membrane and a substrate. The separation functional layer of a composite membrane is formed so as to cover the support layer. Many of composite membranes used in industrial applications are formed using interfacial polycondensation on a porous membrane. Major examples of such a composite membrane include a membrane provided with a separation functional layer made of a polyamide as described in Patent Literature 1.

Asymmetric membranes differ from composite membranes in that asymmetric membranes are made of a single material. However, asymmetric membranes are similar with composite membranes in that both have a dense layer substantially serving as a separation functional layer and have a support layer having a high mechanical strength. Examples of asymmetric membranes include a membrane made of a cellulose acetate material as described in Patent Literature 2.

A support layer in composite membranes or asymmetric membranes usually has a thickness of several tens of micrometers or more. The support layer, as mentioned above, is used for physically supporting a separation functional layer, which is thin and has a low mechanical strength. However, the support layer is known to suffer from the following two problems: (1) the overall water permeability of the whole membrane is lower than that of the separation functional layer, and (2) salts accumulate in the support layer.

The problem (1) has been reported for composite membranes and asymmetric membranes having a thickness of several tens of micrometers or more, but the problem has not been reported for composite membranes or asymmetric membranes having a thickness of less than 20 $\mu$m. The water permeability tends to reduce with the increase in the thickness.

The problem (2) occurs when the membranes are used as forward osmosis membranes. The accumulation of salts on the support layer causes concentration polarization, which decreases the osmotic pressure, resulting in significant decrease in the amount of permeated water (Non-patent Literature 1). In the development of forward osmosis membranes, among various problems, reduction or overcoming of such accumulation of salts is strongly desired.

For example, as a method for preventing the occurrence of concentration polarization, a method has been proposed where a parameter determined by "(thickness x pore curvature) /porosity" of a support layer in a composite membrane is lessened, thereby reducing the accumulation of salts in the support layer. A forward osmosis membrane also has been proposed, including a composite membrane comprising a substrate with a high porosity and a small K value, and a separation functional layer formed on the substrate, as reported in Patent Literature 3. Also proposed is a thin cellulose acetate membrane having a membrane thickness of 1 $\mu$m or less as described in Patent Literature 4.

Citation List

Patent Literature

Patent Literature 1: US Patent No. 3,744,942
Patent Literature 2: JP 2000-17002 A
Patent Literature 3: US 2011/102680 A
Patent Literature 4: JP 2011-255312 A

Non-patent Literature

Non-patent Literature 1: S. Loeb, J. Membr. Sci., 1, 49-63, 249-269 (1976)

Summary of Invention

Technical Problem

The technique of Patent Literature 3 has concerns of a low K value as well as lack of sufficient strength of the support membrane. Patent Literature 4 requires the use of a substrate, and the resulting membrane lacks sufficient strength to withstand a pressurized water permeability test. That is, a semipermeable membrane having both semipermeability and strength has not been reported yet.

An object of the present invention is to provide a process for producing a semipermeable membrane having both excellent semipermeability and sufficient strength and to provide the semipermeable membrane.

Solution to Problem

The present inventors conducted an extensive investigation and, as a result, discovered that the above-mentioned problems are solved by a process comprising

the step of forming a liquid membrane from a membrane-forming solution comprising materials (A) to (C),

material (A) being a polymer having a repeating unit structure comprising one or more kinds of structural moieties selected from the group consisting of an amide group, an imide group, a sulfonyl group, and a heterocyclic ring,
material (B) being a good solvent for material (A),
material (C) being a salt, and

the step of removing the solvent from the liquid membrane.

The inventors further found that more excellent semipermeability are achieved when the membrane-forming solution comprises material (D),

material (D) being one or more kinds of low-molecular weight compounds selected from the group consisting of water and low-molecular weight compounds comprising at least one or more kinds of hydrophilic groups selected from the group consisting of a hydroxy group and a salt thereof, an amino group and a salt thereof, a carboxyl group and a salt and an anhydride thereof, a sulfo group and a salt and an anhydride thereof, and a phosphate group and a salt and an anhydride thereof.

The inventors further conducted an extensive investigation, and as a result, found that high semipermeability-improving effect that was not anticipated at all is achieved by simultaneously forming two kinds of cross-links $\alpha$ and $\beta$ in material (A),

wherein cross-link $\alpha$ is a covalent bond with a nitrogen atom contained in material (A), and

cross-link $\beta$ is an ionic bond between an oxygen or nitrogen atom or a hydrophilic group contained in material (A) and a cation derived from material (C).

Advantageous Effects of Invention

The present invention enables the production of a semipermeable membrane having both excellent semipermeability and sufficient strength.

Description of Embodiments

I. Semipermeable membrane

The semipermeable membrane of the present invention (hereinafter may be simply referred to as the "membrane") comprises, as a main membrane component, a polymer having a repeating unit structure comprising one or more kinds of structural moieties selected from the group consisting of an amide group, an imide group, a sulfonyl group, and a heterocyclic ring. Such a polymer has hydrogen bonding moieties in its repeating unit structure, and due to this, strong intermolecular hydrogen bonds are formed in the membrane . As a result, a membrane having a high mechanical strength is obtained.

In order to achieve strong hydrogen bonding, the main component of the membrane is preferably a polyamide, a polyamide-imide, or a polybenzimidazole, and is particularly preferably a polyamide having a planar amide bond. The use of these polymers as a main component provides a self-supporting membrane having a sufficient mechanical strength.

The membrane, even in the form of a super-thin membrane with a thickness of about 1 $\mu$m, will not cause defects during a pressurized water permeability test even without support of a support layer or a substrate, for example, the membrane will not cause breakage that may result in direct leakage of a feed liquid. In particular, the membrane has the effect of hardly causing defects even when subjected to a water permeability test under pressure of about 1 to 3 MPa.

The thickness of the membrane is set depending on the purpose of use, but is preferably less than 20 $\mu$m. The thickness of the membrane may be 5 $\mu$m or less, or 1 $\mu$m or less. The thickness of the membrane of less than 20 $\mu$m will result in a high semipermeability.

The thickness of the membrane is preferably 0.1 $\mu$m or more. The thickness of the membrane may be 0.5 $\mu$m or more, or 0.8 $\mu$m or more. The thickness of the membrane of 0.1 $\mu$m or more will result in a particularly high strength.

The form of the membrane is not particularly limited, and may be appropriately selected as needed. For example, the membrane in the form of a self-supporting membrane with a thickness of about 1 $\mu$m will have sufficient strength to withstand a water permeability test under pressure of about 1 to 3 MPa. Alternatively, the membrane may be formed into a composite membrane to ensure required semipermeability and to have sufficiently high strength. Further alternatively, the membrane may be formed into a flat membrane or a hollow fiber membrane as long as the membrane has sufficient semipermeability and strength for its use. The present invention has an advantage that the form of the membrane can be flexibly selected depending on the desired semipermeability and strength.

The term "semipermeability" means that a membrane has water permeability and solute removal performance. In particular, in cases where the semipermeability is measured under the conditions of a pressure of 1 MPa, a sodium chloride concentration in a feed liquid of 500 ppm, a temperature of 25°C and a pH of 6.5, the ratio of a pure water permeability coefficient A to a salt permeability coefficient B (A/B) of the membrane calculated in accordance with the formulae described in paragraphs [0076], [0077] and [0078] is preferably 0.1 or more, more preferably 0.3 or more, and still preferably 0.6 or more. The value A/B may be 1.5 or less, 1.2 or less, 1.1 or less, or 1.0 or less. In particular, according to the present invention, a membrane having a ratio A/B of about 0.3 to 1.5 can be obtained. The conditions for the production may be selected so that the semipermeability will be suitable for the intended application.

The semipermeable membrane of the present invention further containing cross-link $\alpha$, cross-link $\beta$, and material (D) has more excellent semipermeability. In particular, the present invention provides the membrane having a ratio A/B (an index indicating semipermeability) of about 5 to 20. The presence of cross-link $\alpha$ will result in increase of the A/B by about 0.1 to 0.5, and the details thereof will be described later. The presence of cross-link $\beta$ will result in increase of the A/B by about 0.1 to 0.5. The presence of cross-link $\beta$ and material (D) will result in increase of the A/B by about 0.3 to 1. Therefore, when these increases are summed up, the semipermeability-improving effect of use of cross-link $\alpha$, cross-link $\beta$ and material (D) together is determined to be about 2 at the maximum. However, according to the extensive investigation by the inventors, the actual semipermeability-improving effect by use of the above combination is about 5 to 20 in terms of an A/B value increase. This effect was not anticipated at all and found by the inventors for the first time.

(1-1) Cross-link $\alpha$

Cross-link $\alpha$ is a covalent cross-link with the nitrogen atoms in the main chain skeleton of material (A). Cross-link $\alpha$ can be formed by various methods, such as heat treatment, electron beam irradiation, ultraviolet irradiation, and plasma treatment, and may be formed using a chemical reaction of material (A) with various cross-linking agents. The cross-linking agent maybe various compounds capable of forming a covalent bond by a chemical reaction to a nitrogen atom in material (A), and the kind of the compound is not particularly limited. Examples of the cross-linking agent include polyfunctional halides and melamine-based compounds. Advantageously, the cross-linking agent is previously mixed in the membrane-forming solution. The formation of cross-link $\alpha$ provides the effect of improving semipermeability and mechanical strength. The formation of cross-link $\alpha$ can be detected by measurement by, for example, FT-IR (Fourier transform infrared spectroscopy), NMR (nuclear magnetic resonance), or X-ray analysis. More conveniently, the formation of cross-link $\alpha$ can be confirmed by immersing the produced semipermeable membrane in a good solvent for material (A) with heating etc. as needed, and then observing whether the membrane is dissolved. The membrane is insoluble when covalent cross-link $\alpha$ is present therein, and thus the presence of cross-link $\alpha$ can be confirmed by observing whether the membrane is soluble/insoluble.

(1-2) Cross-link $\beta$ and material (D)

Cross-link $\beta$ is formed between the oxygen or nitrogen atoms or hydrophilic groups of atoms in hydrogen bonding groups in the main chain skeleton of material (A) and cations derived from material (C). Cross-link $\beta$ is formed by dissolving a salt in a solution comprising material (A). The term hydrogen bonding groups of atoms refers to, for example, an amide bond in the main chain in cases where material (A) is a polyamide, and an imidazole ring structure in cases where material (A) is a polybenzimidazole. Cross-link $\beta$ is formed by electrostatic interaction between anionic atoms and cations derived from the salt. Cross-link $\beta$ provides the effect of improving semipermeability and mechanical strength. The formation of cross-link $\beta$ can be detected by measurement by, for example, FT-IR, NMR, and X-ray analysis, and elemental analysis of the constituents of the semipermeable membrane. The elemental analysis can be performed by various methods, such as ICP emission spectrometry, ESCA, EPMA, and SIMS. Using these methods, the cations derived from material (C) in the semipermeable membrane can be quantified. The amount of material (C) contained in the membrane can be quantified by, for example, thermally decomposing the membrane in sulfuric acid, nitric acid, a mixed solution thereof, or the like, then dissolving the membrane into a solution, and analyzing the solution by ICP emission spectrometry. Alternatively, the formation of cross-link β can be confirmed by FT-IR analysis. The formation of cross-link β can be confirmed by observing the shift of the peak of the anionic atoms in material (A). In the present invention, the amount of the material (C)-derived cations contained in the membrane is preferably 0.1% by mass or more, and more preferably 1% by mass or more, relative to the weight of the membrane.

The semipermeable membrane of the present invention comprises material (D). Material (D) is used for the purpose of improving the semipermeability of the semipermeable membrane. Material (D) is a poor solvent for material (A). Hence, simple addition of material (D) to material (A) cannot give a homogeneous mixture, and consequently material (D) cannot exhibit semipermeability-improving effect. In the present invention, material (C) is used to make material (D) miscible with material (A). The addition of material (C) allows the formation of the above-mentioned cross-link β, which leads to weakening of the intermolecular interaction, hydrogen bonds, in material (A). Under this state, material (D) is then added to the solution comprising materials (A) and (C), and surprisingly material (D) will be dissolved in the solution. This is probably because weakening of the hydrogen bonds enhances the mobility of material (A) and increases the free volume, then as a result gaps are created between the molecules of material (A), and material (D) are incorporated into the gaps, allowing material (D) to be miscible with material (A). That is, cross-link β is required to produce a semipermeable membrane containing material (D). The term "in the membrane" in the present invention refers not to the membrane surface or pores (defects) of the order of micrometers but to the spaces of the order of nanometers between the polymer chains of material (A). The space serves as a water permeation pathway, which determines the semipermeability of the semipermeable membrane of the present invention. A larger number of smaller spaces present in the membrane is more advantageous for the semipermeability. Although the details will be described later, the inventors consider that, in general, cross-link α has the effect of reducing the space size, and cross-link β has the effect of increasing the number of the spaces. Material (D) is probably incorporated in these spaces. Material (D) may be removed to some extent in a solvent removal step and a washing step using hot water described later. The existence of material (D) finally remaining in the membrane can be confirmed by analyzing the membrane with techniques, such as FT-IR, solid-state NMR, and DSC, and determining whether the peak derived from material (D) is observed or not. Material (D) can be quantified by the peak intensity. The carbons derived from material (D) in the present invention preferably accounts for 1% or more, more preferably 5% or more, of the total carbon contained in the membrane.

II. Production process

The process for producing the above-mentioned membrane is exemplified by a production process comprising the step of forming a liquid membrane from a membrane-forming solution comprising materials (A) to (C) described later, and the step of removing a solvent from the liquid membrane. The production process will be more specifically described below.

(II-1) Solution preparation step

The process for producing the membrane in this embodiment comprises preparing a membrane-forming solution comprising materials (A) to (C) below.

(1) Membrane-forming solution

Material (A)

The inventors consider that the solution used for forming a membrane (hereinafter referred to as "membrane-forming solution") preferably has a viscosity high enough to have a sufficient strength. Therefore, the concentration and the molecular weight of the polymer contained in the membrane-forming solution are preferably sufficiently high to the extent that the polymer can retain solubility in material (B) and that the resulting solution can be easily filtered.

The polymer contained in the membrane-forming solution is preferably a polymer capable of forming a hydrogen bond in the membrane-forming solution. Such a polymer capable of forming a hydrogen bond can increase the viscosity of the membrane-forming solution by creating a network formed by hydrogen bonds. Even when the polymer capable of forming a hydrogen bond is not an ultrahigh molecular weight polymer, the polymer can provide the solution with a viscosity high enough to carry out the membrane formation step. Therefore the polymer capable of forming a hydrogen bond is suitable in terms of achieving convenient synthesis. The polymer capable of forming a hydrogen bond can also be used in a relatively low concentration to form the membrane-forming solution, and thus is suitable also in terms of economic efficiency. A membrane formed from the polymer capable of forming a hydrogen bond will have a high mechanical strength and thus is suitable as a self-supporting membrane not having a support layer. A higher strength of the hydrogen bonds formed by the polymer will result in a higher mechanical strength of the resulting membrane.

From the above reasons, the inventors consider that the membrane-forming solution preferably has, as material (A), a repeating unit structure comprising one or more kinds of structural moieties selected from an amide group, an imide group, a sulfonyl group, and a heterocyclic ring. More specific embodiments of material (A) will be described below.

(i) Preferable examples of material (A) include polyamides, polyimides, polyamide-imides, polybenzimidazoles, polysulfones, polyethersulfones, and the like. More specifically, more preferred as material (A) are polyamides, polybenzimidazoles, and polyamide-imides, which have a relatively rigid structure. Particularly preferred are polyamides, which can create strong hydrogen-bond network. Material (A) may be one or more kinds of aromatic polyamides or meta-substituted aromatic polyamides. Material (A) may be meta-substituted aromatic polyamides having a repeating unit comprising an ether bond.

(ii) In order to achieve water permeability of the membrane, material (A) may contain either a hydrophilic group or a halogen atom. The hydrophilic group or the halogen atom can be contained as a substituent in the repeating units of material (A). The substituent may be contained in part of the repeating units, or in all the repeating units. The ratio of the substituent-containing repeating units occupying all repeating units is represented by the ratio of "the repeating units having the introduced substituent" to "all repeating units", and the ratio is preferably 1:100 to 100:100. The hydrophilic group or the halogen atom is only required to be introduced into at least one of substitutable groups in one repeating unit.

Example of the hydrophilic group include a carboxyl group, a sulfo group, a phosphate group, an amino group, and a hydroxy group, and salts thereof. The hydrophilic group may be contained in the repeating units of material (A).

The polymer as material (A) may contain only one kind of hydrophilic group or two or more kinds of hydrophilic groups.

The halogen atom enhances the interaction with material (C)-derived cations described later. Examples of the halogen atom include a chlorine atom, a bromine atom, an iodine atom, and a fluorine atom. The hydrophilic group or the halogen group is preferably introduced as a substituent for the polymer chains.

The polymer as material (A) may contain only one kind of halogen atom or two or more kinds of halogen atoms.

The hydrophilic group and the halogen atom can be used in combination depending on the desired properties and the like of the semipermeable membrane.

(iii) The polymer used as material (A) may have a polar group of atoms in combination with the above-mentioned structure. Examples of the polar group of atoms include a hydroxy group, an N-hydroxy group, a thiol group, a carboxyl group, a sulfo group, a phosphate group, an amino group, a nitro group, a nitroso group, a halogen group, a diazo group, an azide group, a cyano group, an acyl group, an acetyl group, a ketene group, an isocyanate group, a thioisocyanate group, a methoxy group, an ethoxy group, a carbonyl group, a sulfonyl group, an ester group, an amide group, a thioamide group, an imide group, a diimide group, an imino group, an N-oxide group, an S-oxide group, an oxy group, an oxo group, an azo group, a phosphino group, a thio group, a thionyl group, a thioxy group, and the like. In the group of atoms comprising a hydrogen atom, all or some of the hydrogen atoms may be substituted by any kinds of alkyl groups.

The polymer having the above group of atoms may contain only one kind of the above groups of atoms or contain a plurality of kinds of the above groups of atoms.

Material (A) is not necessarily required to contain a polar group of atoms.

(iv) The polymer as material (A) may have any primary structure, such as a linear structure, a branched structure, a star-shaped structure, a block polymer, a gradient polymer, and a sun-shaped structure.

The matters described above can be combined without any limitation.

For example, the membrane-forming solution may contain one or more kinds of polymers selected from polyamides and polybenzimidazoles that contain a hydrophilic group in the repeating units. The membrane-forming solution may contain a meta-substituted aromatic polyamide having a repeating unit comprising an ether bond and a hydrophilic group.

The kind of material (A) is not limited to the above examples. Material (A) is only required to have solubility in material (B), to provide the membrane-forming solution with a viscosity high enough to perform the liquid membrane formation step, and to have hydrogen bond forming ability. Material (A) is selected depending on the desired strength, performance, and the like of the semipermeable membrane.

The membrane-forming solution may contain, as material (A), only one kind of polymer or two or more kinds of polymers.

Material (B)

Material (B) is a good solvent for material (A). Typically, various kinds of organic solvents for general purpose are used as material (B). In the solution preparation step, material (B) may be a single kind of solvent, or a mixed solvent comprising two or more kinds. Any kind of solvent can be selected as material (B) as long as it does not impair the solubility of material (A).

Specifically, when material (A) is a polyamide, a polybenzimidazole, a polyamide-imide, or the like, a suitable solvent as material (B) is a good solvent for the materials, including N-methyl-2-pyrrolidone, and amides or sulfoxide solvents such as dimethyl sulfoxide and dimethylformamide.

Material (C)

Material (C) is a salt. Material (C) provides the effect of improving the water permeability of the resulting membrane.

The inventors consider that the reasons of the improvement of the water permeability of the membrane are as follows. Generally, when a membrane-forming solution is heat-dried to form a membrane, strong interaction occurs between the polymer chains, which prevents the formation of pores serving as water passages, leading to the reduction of water permeability of the membrane. On the other hand, in the present invention, material (C) interacts with material (A) and thereby weakens the intermolecular interaction in materials (A). The membrane production under the weakened intermolecular interaction will result in the formation of a large number of fine pores.

In this manner, material (A) contributes to the mechanical strength, and furthermore, material (C) contributes to the water permeability. The action of material (C) contributes to the formation of a membrane having water permeability.

Suitable salts as material (C) are, for example, various metal salts, ammonium salts, acetates, and the like. Examples of the metal salts include halides of metals such as lithium, sodium, potassium, copper, calcium, barium, magnesium, mercury, silver, and the like. Trivalent or higher valent metal salts are susceptible to oxidation, and therefore for ease of storing and handling, monovalent and divalent metal salts are preferred. For formation of stronger interaction with material (A), material (C) is particularly preferably a divalent metal salt.

The membrane-forming solution may contain only one kind of salt or two or more kinds of salts as material (C). As material (C), an inorganic salt not only exhibiting the above-mentioned effects but also, for example, acting as a dissolution aid for material (A) can be selected.

The amount of material (C) in the membrane-forming solution relative to the total weight of the membrane-forming solution (the ratio of the weight of material (C) to the total weight of the membrane-forming solution) is preferably 0.1% by weight or more, and more preferably 1% by weight or more. When the amount of material (C) in the membrane-forming solution is 0.1% by weight or more, particularly high improving effect on the semipermeability of the membrane is achieved. The amount of material (C) in the membrane-forming solution is preferably 20% by weight or less, and more preferably 10% by weight or less. When the amount of material (C) is 20% by weight or less, material (C) is easily dissolved in the membrane-forming solution and hardly precipitates.

Material (D)

The membrane-forming solution may further contain material (D). Material (D) is at least one kind of compounds selected from the group consisting of materials (a) and (b):

(a) a compound having at least one kind of hydrophilic groups selected from the group consisting of a hydroxy group and a salt thereof; an amino group and a salt thereof; a carboxyl group and a salt and an anhydride thereof; a sulfo group and a salt and an anhydride thereof; and a phosphate group and a salt and an anhydride thereof, and

(b) water.

Since material (D) is a hydrophilic material, material (D) contained in the membrane-forming solution facilitates the formation of a large number of fine pores serving as water passages, and improves the water permeability.

Even when material (D) is immiscible with material (A), material (D) is soluble in the membrane-forming solution containing materials (A) to (C). This is because material (D) is soluble in material (B). Material (D) is dissolved in material (B), and then incorporated in the space created by the effect of material (C) in the membrane-forming solution and in the resulting membrane. In this manner, material (D) becomes miscible with (A). That is, material (C) can act as a miscible agent when material (D) is a material having no miscibility with material (A).

Also in cases where material (D) has miscibility with material (A), the use of material (C) in combination improves the solubility of material (D). That is, material (C) is preferably used when a large amount of material (D) is added.

Specific examples of material (D) include a compound having two or more hydrophilic groups, such as various diols, triols, and metal salts thereof; and an organic acid having two or more acidic groups, such as dicarboxylic acids and disulfonic acids, and a salt and an anhydride thereof. Examples of the high-molecular weight compound usable as material (D) include hydrophilic and water-soluble polymers, such as polyvinyl alcohol, polyacrylic acid, polyvinylsulfonic acid, polybenzoic acid, and polystyrene sulfonic acid; metal salts thereof, and the like.

The above-mentioned materials are described only as examples of material (D), and material (D) is not necessarily limited to them.

Material (D) may be a low-molecular weight compound. The low-molecular weight compound used as material (D) may have 1 to 3 hydrophilic groups, or salts or anhydrides thereof. The term "low-molecular weight compound" used herein means a compound having no repeating structure, and particularly refers to a compound having a molecular weight of less than 100.

Material (D) may be a polymer. The term "polymer" used herein is a compound having a repeating structure, and particularly refers to a compound having a molecular weight of 100 or more, or a compound having a number average degree of polymerization of 500 or less.

Material (D) may be a diol, a triol, or a dicarboxylic anhydride.

The amount of material (D) added to the membrane-forming solution is not limited to a specific value, and is set depending on the kind and amount of material (A), the kind and amount of material (C), the desired water permeability, and the like. However, when material (D) is a poor solvent for material (A) or when material (D) is immiscible with material (A), the amount of material (D) to be added is selected so that material (A) is not dissolved or precipitated.

Specifically, the amount of material (D) (the weight ratio of material (D) to the total weight of the membrane-forming solution) is preferably 0.001% by weight to 40% by weight, or 1% by weight to 20% by weight. When the amount of material (D) is 0.001% by weight or more, the water permeability is particularly improved. When the amount of material (D) is 40% by weight or less, a homogeneous membrane-forming solution is easily obtained.

(2) Embodiment of solution preparation step

The solution preparation step will be described as the step of preparing the membrane-forming raw solution (solution preparation step) below. Specifically, the solution preparation step comprises the sub-step of mixing the components of the membrane-forming raw solution listed in the above (1). For preparation of a homogeneous transparent membrane-forming solution, this step can comprise a plurality of sub-steps. For example, the solution preparation step may comprise stirring a solution containing the components with heating. The mixing ratio or the order of the addition of materials (A) to (D) are not particularly limited. A cross-linking agent may be added, if needed.

The amount of each material to be added relative to the volume of the membrane-forming solution is preferably set so that a homogenous membrane-forming solution will be obtained. When insoluble matter is present, it may be removed with a separation method, such as filtration, and the resulting filtrate may be used as a membrane-forming solution. Filtration of the membrane-forming solution before coating provides excellent coating properties and can prevent the occurrence of defects after the membrane formation. At the time of the filtration, a pressure filter can be used depending on the level of the viscosity of the solution. In order to enhance the effect by the filtration, the pore diameter of the filter is, in particular, 3 $\mu$m or less, preferably 1 $\mu$m or less, more preferably 0.4 $\mu$m or less, and still preferably 0.2 $\mu$m or less.

(II-2) Liquid membrane formation step

The production process may comprise the step of forming a liquid membrane from the membrane-forming solution (liquid membrane formation step).

For formation of the liquid membrane, various methods using a dip coater, a spin coater, and an applicator can be used. When the membrane thickness is intended to be several micrometers or less, coating using a spin coater is particularly preferred. Specifically, the liquid membrane formation can be achieved by coating of the membrane-forming solution onto a substrate.

(II-3) Solvent removal step and cross-linking step

The production process of the present invention comprises, after the liquid membrane formation step, removing the solvent and, if needed, performing cross-linking.

In the solvent removal step, the removal of the solvent may be performed either of two methods: heat-drying, or immersion in a liquid that is a poor solvent for material (A) (polymer) and is miscible with material (B) (solvent).

When the solvent is removed by heat-drying, evaporation of material (B) and subsequent acceleration of polymer aggregation are achieved by heat-drying to give a membrane. In this case, a cross-linking agent may be previously added, and cross-linking may be promoted by heating to form cross-link α. Cross-link α may be formed by various methods, such as heat treatment, electron beam irradiation, ultraviolet irradiation, and plasma treatment. These treatments may be performed before or after the solvent removal, and can be suitably incorporated in the cross-linking step as needed.

In conventional processes, the formation of a membrane by heat-drying is accompanied by several problems. In the formation of a membrane by heat-drying, a compound having solubility in a solvent is used as a main component polymer of the membrane. For dissolution in a solvent, the polymer is desired not to be a cross-linked structure but to be a linear or near linear structure. However, when dry-heated, a linear polymer tends to cause very strong interaction between polymer chains. As a result, a membrane with self-supporting properties and high mechanical strength is obtained, but due to the strong intermolecular interaction, the formation of fine pores serving as water passages is hindered and water permeability is extremely low.

However, according to the present invention, material (C) weakens the strong intermolecular interaction of material (A) and facilitates the formation of fine pores serving as water passages, thereby achieving excellent water permeability and mechanical strength high enough for practical use. Material (D) also improves the water permeability as described above.

In the solvent removal step, the liquid membrane may be brought into contact with any of water, a monohydric or higher hydric alcohol, a mixture of water and a monohydric or higher hydric alcohol, or a mixture of material (B) with either water or a monohydric or higher hydric alcohol to remove the solvent.

Material (A) is a water-insoluble polymer, and a salt is used as material (C) for the purpose of swelling of the polymer, and accordingly water, which can dissolve the salt, is used as a liquid for immersion. In the liquid for immersion, additives, such as salts, alcohols, and good solvents for the polymer may be dissolved as needed before use.

When material (B) has a higher boiling point than that of material (D), there is a risk that material (D) may also be evaporated by heat-drying, and therefore the solvent removal is preferably performed by immersion in a liquid. When material (B) has a lower boiling point than that of material (D), material (D) is not evaporated by heat-drying but remains in the membrane. In this case, the solvent may be removed by either heat-drying or immersion in a liquid. The selection of heat-drying or immersion is appropriately done depending on the kind of material to be used. The heat-drying and immersion may be performed in combination. For example, heat-drying may be performed first followed by immersion in a liquid, or immersion in a liquid may be performed first followed by heat-drying.

(II-4) Other steps

The production process may further comprise other steps. Examples of said other steps include the step of hot-water washing of a semipermeable membrane formed in the solvent removal step. Such a hot-water washing treatment improves the mobility of the polymer, thereby promoting the reorganization of the polymer phase, and as a result, a denser membrane can be obtained. This step will enhance the desalting performance of the membrane, and therefore may be performed if needed.

The hot-water washing treatment refers to immersion of a semipermeable membrane in hot water at a predetermined temperature for a predetermined time. Specifically, the membrane is required to be immersed in hot water at 90°C for 5 minutes. Material (D) present in the semipermeable membrane of the present invention is retained in the membrane even after the hot-water washing treatment. The existence of material (D) present in the membrane as a final product can be confirmed by analyzing the membrane by a technique, such as FT-IR, solid-state NMR, and DSC, and determining the presence of the peak derived from material (D). Material (D) can be quantified from the peak intensity.

Examples

The present invention will be described in more detail below based on Examples. However, the present invention is not limited to these Examples. Various variations or modifications may be made thereto without departing from the technical scope of the present invention.

1. Membrane formation conditions and water permeability

The production conditions for membranes, the structure parameters of membranes, and the performance values determined by a water permeability test are summarized in Tables 1 to 7. The chemical structures of material (A) are summarized in Table 8. Unless otherwise noted in the remarks in Table 1, materials (A) to (D) were mixed at a mixing ratio (by weight) of (A) : (B) : (C) : (D1) : (D2) = 15:60:10:10:5 in all Experiments shown in Table 1. Both D1 and D2 correspond to material (D).

Materials A-6 to A-10 do not meet the above definition for material (A), but they are referred to as material (A) for convenience.

(1) Solution preparation

A predetermined amount of material (A) was placed into a glass container, material (B) was added thereto, and the mixture was stirred at 70°C to prepare a transparent homogeneous solution. Then, predetermined amounts of materials (C) and (D2) were added to the solution, and the mixture was further stirred at the same temperature to give a transparent homogeneous solution. Finally, while stirring was continued at the same temperature, material (D1) was gradually added to the solution and dissolved to give a transparent homogeneous membrane-forming solution. The solution was filtered through a PVDF (polyvinylidene fluoride) membrane filter having a pore diameter of 0.2 μm, and then vacuum-defoamed. The resulting solution was allowed to stand for 24 hours, and then used for producing a membrane.

(2) Liquid membrane formation

A membrane was produced by a coating method using the polymer solution. The polymer solution was applied onto a silicon wafer with a spin coater. The coating amount, the rotational speed, and the time were appropriately controlled so that the membrane thickness would be about 1 μm.

(3) Solvent removal, etc.

The silicon wafer having the polymer solution applied thereto was then heat-dried or immersed in an aqueous solution to remove the solvent. After the solvent removal, the membrane was separated from the wafer in pure water at room temperature, and then used for the water permeability test. For some Experiments, hot-water washing was performed and indicated in the remarks in Tables 1 to 7.

(4) Pressurized water permeability test

Before performing the water permeability test, all the membrane samples were immersed in an isopropyl alcohol aqueous solution for a certain period of time. The water permeability test was performed under the conditions of a pressure of 1 MPa, a sodium chloride concentration in a feed liquid of 500 ppm, a temperature of 25°C and a pH of 6.5. In all Experiments, the membrane area and the measurement time were constant.

In the Examples below, the pure water permeability coefficient A ($m^3/m^2 \cdot day \cdot MPa$) and the salt (solute) permeability coefficient B (m/day) are calculated by the following transport equations (1) and (2) based on non-equilibrium thermodynamics:

$$Jv = A \ (\Delta P - \sigma \cdot \Delta \pi) \quad (\text{Equation (1)})$$

$$Js = B(Cm - Cp) + (1 - \sigma)C \times Flux \quad (\text{Equation (2)})$$

$$Cm = Cp + (\text{salt concentration in feed liquid} - Cp) \times \exp(Jv/Js)$$
$$(\text{Equation (3)}),$$

wherein Jv represents the water permeation flux through the membrane ($mol/m^2 \cdot s$), $\Delta P$ represents the hydraulic pressure difference (MPa) between the feed and permeate sides of the membrane, $\sigma$ represents the solute reflection coefficient, $\Delta \pi$ represents the osmotic pressure difference (MPa) between the feed and permeate sides of the membrane, Js represents the solute permeation flux through the membrane ($mol/m^2 \cdot s$), Cm represents the solute concentration on the membrane surface ($mol/m^3$), Cp represents the solute concentration in the permeate ($mol/m^3$), and C represents the solute concentration in the feed and permeate sides of the membrane ($mol/m^3$).

The variable C has no practical meaning in cases where the concentration difference between the feed and permeate sides of the membrane is relatively large, as in the pressurized water permeability test shown in the Examples. Accordingly, Equation (4) derived by integrating Equation (2) with respect to the membrane thickness was used. Equation (4) is frequently used as an approximation formula.

$$R = \sigma(1 - F)/(1 - aF) \quad (\text{Equation (4)})$$

F is represented by Equation (5). R is the true rejection rate and represented by Equation (6).

$$F = \exp\{-(1 - \sigma)Jv/p\} \quad (\text{Equation (5)})$$

$$R = 1 - Cp/Cm \quad (\text{Equation (6)})$$

The variable A was calculated from Equation (1) by varying the value of $\Delta$p. Jv was variously changed to measure R. R and 1/Jv were plotted, and curve fitting of Equations (2) and (4) to the plot was performed to simultaneously determine B (salt permeability coefficient) and $\sigma$(solute reflection coefficient).

Higher pure water permeability coefficient A indicates a higher water permeability of the membrane. In contrast, lower salt permeability coefficient B indicates a higher salt removal performance. That is, a higher ratio of the pure water permeability coefficient A to the salt permeability coefficient B means more excellent semipermeability of the membrane. Hereinafter, the value of the ratio is referred to as an A/B value. The pressurized water permeability test is performed on several membrane samples under the same conditions, and the A/B values of the membrane samples are compared to determine which one has superior performance as a semipermeable membrane. A higher A/B value indicates more excellent as a semipermeable membrane.

The abbreviations in each table represent the following:

EG: ethylene glycol,
Gly: glycerin,
MA: maleic anhydride,
PVA: polyvinyl alcohol,
NMP: N-methyl-2-pyrrolidone,
DMF: N,N-dimethylformamide,
LiCl: lithium chloride,
$MgCl_2$: magnesium chloride, and
$ZnCl_2$: zinc chloride.

2. Evaluation results

In the following Tables 1 to 7 and 9, A/B represents the ratio of the pure water permeability coefficient to the salt permeability coefficient.

As shown in Table 1, water permeability was not observed in Experiment 1. In contrast, water permeability was observed in Experiments 2 to 4, in which an inorganic salt was added to the membrane-forming solution. The A/B value in Experiment 3, in which magnesium chloride was added, was the highest among those in Experiments 2 to 4.

In Experiments 5 to 7, various aqueous solutions or water was added. The addition of the aqueous solutions or water further improved the water permeability compared to Experiments 2 to 4. In particular, a highest A/B value was observed in Experiment 5, in which water alone was added.

In Experiment 8 shown in Table 2, further addition of ethylene glycol resulted in great increase in the ratio (the pure water permeability coefficient A/the salt permeability coefficient B).

In Experiment 9, in which a hot-water washing treatment was further performed, the water permeability was decreased but the desalting performance was greatly improved, resulting in increase in the A/B value.

In Experiments 10 and 11, the amount of ethylene glycol added was increased compared to that in Experiment 9, which resulted in great improvement in the water permeability as well as the desalting performance. Consequently, the A/B value was increased.

In Experiments 12 to 14 shown in Table 3, substitutes for ethylene glycol were tested. Generally, as the molecular size of the substitute was increased, the water permeability was improved and the desalting performance was decreased, but excellent semipermeability was exhibited.

In Experiments 15 to 17 shown in Table 4, water and/or ethylene glycol was added without the addition of magnesium chloride. In these experimental examples, the polymer was precipitated and not dissolved in the absence of magnesium chloride, and therefore the membrane production itself was difficult. This shows that the addition of a salt as material (C) is important for producing a membrane having water permeability.

In Experiment 18, magnesium chloride and ethylene glycol were added without addition of water. In this case, the polymer was dissolved, and water permeability and desalting performance were exhibited.

The above results revealed that the metallic cations derived from the inorganic salt interact with the anionic sites of the polymer chain, and that water or ethylene glycol is dissolved in the polymer solution only via the metallic cations From these findings, it is considered that water or ethylene glycol is present between the polymer chains, which results in swelling of the polymer.

In Experiments 19 to 23, the solvent was removed not by immersion in water but by heat-drying. The membrane obtained in Experiment 19 exhibit no water permeability. However, semipermeability was exhibited in Experiment 20, which was different from the composition in Experiment 19 in that it further contains an inorganic salt. Experiment 21 further contains water in addition to the composition in Experiment 20, but no significant difference was seen in the water permeability. This is probably because heat-drying was performed at a higher temperature than the boiling point of water, and as a result, no water remained in the membrane. In Experiments 22 and 23, the A/B values were further improved compared to those in the samples in Experiments 20 and 21. This is probably because ethylene glycol (boiling point: about 200°C) remained in the membrane. Generally, in the comparison of the membranes with the same composition, the membranes obtained by immersion in water had a higher A/B value than those of the membranes obtained by heat-drying.

In Experiments 24 to 35 shown in Tables 5 to 7, various kinds of membranes were produced using the typical composition as shown in Experiment 11 except that material (A) was changed to various kinds of materials listed in Table 8, and examinations on the membranes were conducted. As a result, when the polymer had repeating units containing an amide group, an imide group, a sulfonyl group, or a heterocyclic structure, membranes with excellent semipermeability and sufficient strength were successfully formed using the solution composition and the solvent removal method that were found to be suitable by the examinations in Experiments 1 to 23.

In contrast, the materials in Experiments 28 to 33 were difficult to be formed into a homogeneous membrane-forming solution or lacked sufficient mechanical strength when formed into a thin membrane. Therefore the materials were judged to be inferior to the polymers having a repeating unit structure containing an amide group, an imide group, a sulfonyl group, or a heterocyclic ring.

In Experiments 34 and 35, membranes having water permeability were successfully produced, which confirmed the effects of the present invention.

The membranes (in Experiments 2 to 14, 18 to 27, and 34 to 37) comprising, as a main membrane component, the polymer having a repeating unit structure comprising one or more kinds of structural moieties selected from the group consisting of an amide group, an imide group, a sulfonyl group, and a heterocyclic ring showed no defect even in the above-mentioned pressurized water permeability test and achieved sufficient membrane strength. In addition, excellent water permeability was achieved in Experiments 2 to 14, 18 to 27, and 34 to 37 due to the effects of the salt on the membrane production.

Next, a semipermeable membrane containing cross-link α, cross-link β, and material (D) will be described below.

3. Membrane formation conditions and water permeability

The production conditions for membranes, the structure parameters of membranes, and the performance values in the water permeability test were summarized in Table 9. Materials (A) to (D) were mixed at a mixing ratio (by weight) of (A) : (B) : (C) : (D1) : (D2) = 15:60:10:10:5 through the Experiments. Both D1 and D2 correspond to material (D). In Experiments 38 to 55 shown in Table 9, material (B) was NMP, and in Experiments 40 to 46 and 49 to 55, material (C) was magnesium chloride. In Experiments 38, 39, 47, and 48, no material (C) was added.

A polyfunctional melamine compound, CYMEL 303 (manufactured by Cytec Industries Japan LLC), as a cross-linking agent was added to material (A) in an amount of 1 mol%. The presence or absence of a cross-link and each material are summarized in Table 9.

(1) Solution preparation

A predetermined amount of material (A) was placed into a glass container, material (B) (NMP in Experiments) was added thereto, and the mixture was stirred at 70°C to prepare a transparent homogeneous solution. Then, predetermined amounts of materials (C) (magnesium chloride in Experiments) and (D2) were added to the solution, and the mixture was further stirred at the same temperature to give a transparent homogeneous solution. While stirring was continued at the same temperature, material (D1) was gradually added to the solution and dissolved. Subsequently, a predetermined amount of CYMEL 303 as a cross-linking agent was added, and the mixture was stirred to give a transparent homogeneous membrane-forming solution. The solution was filtered through a PVDF membrane filter having a pore diameter of 0.2 μm, and then vacuum-defoamed. The resulting solution was allowed to stand for 24 hours, and then used for producing a membrane.

(2) Liquid membrane formation

A membrane was produced by a coating method using the polymer solution. The polymer solution was applied onto a silicon wafer with a spin coater. The coating amount, the rotational speed, and the time were appropriately controlled so that the membrane thickness would be about 1 μm.

(3) Solvent removal, etc.

The silicon wafer having the polymer solution applied thereto was then heat-dried to remove the solvent and form cross-link α. After the solvent removal, the membrane was separated from the wafer in pure water at room temperature, and then used for a water permeability test.

4. Evaluation results

Referring to Table 9, as shown in Experiments 38 and 47, semipermeability was hardly observed when material (A) was used alone. In Experiments 39 and 48, the improvement of semipermeability due to the effect of cross-link α was observed, and the improving effect was about 0.1 to 0.15 in terms of the A/B value. In Experiments 40 and 49, semipermeability was further improved due to the effect of cross-link α and cross-link β compared to those of Experiments 38 and 47, and the improving effect was about 0.35 to 0.4. In Experiments 41 to 43 and 50 to 52, various kinds of materials (D) were added in addition to cross-link α and cross-link β, and the dramatic improvement in the A/B value was observed. In Experiments 44 and 53, the effect of use of cross-link β alone was examined. In cases where material A-1 was used, Experiment 44 utilizing cross-link β alone showed a lower A/B value than that in Experiment 40 utilizing cross-link α and cross-link β. However, in cases where material A-13 was used, Experiment 53 utilizing cross-link β alone showed a higher A/B value than that in Experiment 49 utilizing cross-link α and cross-link β. In Experiments 45, 46, 54, and 55, the effect of the addition of cross-link β and various kinds of materials (D) was examined, and the improvement of the A/B value was about 0.1 to 0.5. From the above results, it was found that use of cross-link α or cross-link β alone or of a combination thereof showed only a limited effect, but use of a combination of cross-link α, cross-link β and material (D) showed an extremely high improving effect on semipermeability.

5. Membrane structure analysis

Determination of presence of cross-link α

An amount of 5 g of each of the membrane samples in Experiments 38 to 55 was immersed in 100 mL of NMP and heated at 70°C for 12 hours. The membrane samples containing cross-link α remained undissolved in the NMP. The samples remaining undissolved were taken out and heat-dried at 200°C to evaporate NMP from the samples, and then the weight was measured again. No weight change was observed in all the samples. The samples lacking cross-link α were dissolved in NMP to give a homogeneous solution. The above results confirmed the progress of cross linking α in all the samples that were produced using a cross-linking agent and indicated to have formed cross-link α in Table 9.

Determination of presence of cross-link β

Using FT-IR measurement, the stretching vibration peak of the carbonyl groups in the amide bonds in material (A) was monitored. The results are shown in Table 10. In Experiments 38 and 47, no material (C) was added, and therefore no cross-link β was formed and intermolecular hydrogen bonds are formed between the amide bonds. In Experiments 44, 42, 53, and 55, material (C) was added, and as a result, the stretching vibration peak of the carbonyl groups in the amide bonds of material (A) was shifted by about 15. This shift shows that, due to the presence of material (C), the bonding strength between the carbon atom and the oxygen atom in the carbonyl groups was strengthened, that is, the intermolecular hydrogen bonds of the carbonyl groups were weakened. These facts revealed that some of the intermolecular hydrogen bonds formed by the carbonyl groups were broken, and ionic bonds were newly formed with magnesium ions derived from material (C), that is, cross-link β was newly formed. In terms of Experiments 38, 47, 42, 44, 53, and 55, the produced membranes were thermally decomposed with sulfuric acid and nitric acid, then the mixture was dissolved in diluted nitric acid with heating, and the volume was adjusted. The solution was then subjected to elemental analysis by ICP emission spectrometry to determine the amount of magnesium as material (C). The results are shown in Table 11. In the membranes obtained in Experiments 38 and 47, to which no material (C) was added, no magnesium was detected. In contrast to Experiments 38 and 47, magnesium was detected in the membranes obtained in Experiments 42, 44, 53, and 55, which shows the presence of magnesium in the membranes.

Determination of presence of material (D) and semipermeability-improving effect

The presence of material (D) in the membrane was examined. The results are shown in Table 12. The analysis was conducted by differential scanning calorimetry (DSC). Generally, the melting point of ice confined in nanometer-sized fine pores or clusters is lower than that of normal bulk ice (melting point: 0°C). By using this phenomenon, the cluster size distribution and the pore radius distribution can be calculated from the melting point distribution in the DSC curve, and the amount of water can be calculated from the melting heat. Specifically, the sample immersed in water was taken out immediately before the DSC measurement, then excessive water (bulk water) on the surface was removed, and the sample was placed in a closed sample container.

Measurement conditions

DSC instrument: DSC Q100 manufactured by TA Instruments Data processing: analysis program "TRC-THADAP-DSC" manufactured by Toray Research Center, Inc.

Measurement temperature range: about -55 to 5°C
Rate of temperature rise: 0.3°C/min
Amount of sample: about 5 mg
Sample container: closed sample container made of aluminum Calibration of temperature and calorie: pure water (melting point: 0.0°C, melting heat: 79.7 cal/g)

Table 11 contains the results for Experiments 38 and 47, in which material (A) was used alone. The presence of water was observed in the membranes obtained in the Experiments, but the endothermic heat flux was as small as about 1 mcal/sec and the melting point was 0°C. The results were due to the detection of a small amount of water remaining on the surface of the membranes, and the presence of water in the membrane was not observed. In Experiments 45 and 54, material (C) was added for formation of cross-link β, and water was further added as material (D). In these cases, a significant increase in the endothermic heat flux was observed, which was about 10 times those in Experiments 38 or 47, and the melting point of water was below the freezing point. These results show that the water added as material (D) was present in the membranes in Experiments 45 and 54. The presence of water in the membranes is due to the presence of cross-link β. This is, cross-link β is formed by the ionic bonds between the material (C) -derived cations and material (A). The cations also have a high affinity with water, and thus the water added as material (D) is specifically adsorbed by and coordinates with the cations. Indeed, material (D) is a poor solvent for material (A) and these materials are incapable of being mixed together under normal circumstances. However, in Experiments 45 and 54, since material (D) and material (A) were fully miscible with each other, the water added as material (D) was considered to be well combined with the cations. That is, material (D) is present between the polymer chains as material (A). Therefore, it is concluded that, in the cases of Experiments 45 and 54, material (D) is present in the membrane. This fact also provides the evidence of good formation of cross-link β.

In Experiments 41 and 50, it was shown that material (D) was present in the membrane as in the cases of Experiments 45 and 54. The melting point of the water in the membrane in Experiments 41 and 50 was lower than that in Experiments 45 and 54. This results show that the semipermeable membranes obtained in Experiments 41 and 50 have finer pores than those of the semipermeable membranes obtained in Experiments 45 and 54. In addition, the A/B values, which show semipermeability, were superior in Experiments 41 and 50 than in Experiments 45 and 54. These results indicated that cross-link α effectively reduced the pore size and improved semipermeability. That is, it is revealed that when cross-link β and material (D) are present in the membrane, the improving effect of cross-link α on semipermeability is significantly increased compared to the cases where neither cross-link β nor material (D) is present.

In Experiment 51, the membrane was heated in hot water at 90°C for 5 minutes, then vacuum-dried, and subjected to FT-IR measurement and solid-state NMR measurement. In the FT-IR measurement, the peaks of the aliphatic hydrocarbon group and the alcohol derived from ethylene glycol were observed. Similarly, in the solid-state DD/MAS NMR measurement, the peaks derived from ethylene glycol were observed at 15 to 20 ppm and 55 to 60 ppm. These results confirmed the presence of ethylene glycol in the membrane. From the peak intensities, the percentage of ethylene glycol present in the membrane was calculated to be 7% relative to the total carbon.

Table 1

| Experiment number | Material (A) | Material (B) | Material (C) | Material (D1) | Material (D2) | Solvent removal conditions | Membrane thickness ($\mu$m) | A/B | Remarks |
|---|---|---|---|---|---|---|---|---|---|
| 1 | A-1 | NMP | - | - | - | Immersion in pure water at 10°C for 24 hours | 1.0 | 0.10 | No water permeability |
| 2 | A-1 | NMP | LiCl | - | - | Immersion in pure water at 10°C for 24 hours | 1.0 | 0.15 | |
| 3 | A-1 | NMP | $MgCl_2$ | - | - | Immersion in pure water at 10°C for 24 hours | 1.1 | 0.38 | |
| 4 | A-1 | NMP | $ZnCl_2$ | - | - | Immersion in pure water at 10°C for 24 hours | 1.1 | 0.30 | |
| 5 | A-1 | NMP | $MgCl_2$ | Water | - | Immersion in pure water at 10°C for 24 hours | 1.0 | 0.48 | |
| 6 | A-1 | NMP | $MgCl_2$ | $CH_3OH$ | - | Immersion in pure water at 10°C for 24 hours | 1.0 | 0.43 | |
| 7 | A-1 | NMP | $MgCl_2$ | Water/ $CH_3OH$ | - | Immersion in pure water at 10°C for 24 hours | 0.95 | 0.45 | |

Table 2

| Experiment number | Material (A) | Material (B) | Material (C) | Material (D1) | Material (D2) | Solvent removal conditions | Membrane thickness ($\mu$m) | A/B | Remarks |
|---|---|---|---|---|---|---|---|---|---|
| 8 | A-1 | NMP | MgCl$_2$ | Water | EG | Immersion in pure water at 10°C for 24 hours | 1.0 | 0.56 | |
| 9 | A-1 | NMP | MgCl$_2$ | Water | EG | Immersion in pure water at 10°C for 24 hours | 1.0 | 0.60 | After solvent removal, washed with pure water at 90°C for 5 minutes. |
| 10 | A-1 | NMP | MgCl$_2$ | Water | EG | Immersion in pure water at 10°C for 24 hours | 1.0 | 0.65 | After solvent removal, washed with pure water at 90°C for 5 minutes. The amount (by weight) of EG was increased to 2 times that in Experiment 9. |
| 11 | A-1 | NMP | MgCl$_2$ | Water | EG | Immersion in pure water at 10°C for 24 hours | 1.0 | 0.81 | After solvent removal, washed with pure water at 90°C for 5 minutes. The amount (by weight) of EG was increased to 2 times that in Experiment 9. |

Table 3

| Experiment number | Material (A) | Material (B) | Material (C) | Material (D1) | Material (D2) | Solvent removal conditions | Membrane thickness ($\mu$m) | A/B | Remarks |
|---|---|---|---|---|---|---|---|---|---|
| 12 | A-1 | NMP | $MgCl_2$ | Water | Gly | Immersion in pure water at 10°C for 24 hours | 1.0 | 0.76 | After solvent removal, washed with pure water at 90°C for 5 minutes. |
| 13 | A-1 | NMP | $MgCl_2$ | Water | MA | Immersion in pure water at 10°C for 24 hours | 1.0 | 0.68 | After solvent removal, washed with pure water at 90°C for 5 minutes. |
| 14 | A-1 | NMP | $MgCl_2$ | Water | PVA (polymerization degree: 500) | Immersion in pure water at 10°C for 24 hours | 1.0 | 0.65 | After solvent removal, washed with pure water at 90°C for 5 minutes. |

Table 4

| Experiment number | Material (A) | Material (B) | Material (C) | Material (D1) | Material (D2) | Solvent removal conditions | Membrane thickness ($\mu$m) | A/B | Remarks |
|---|---|---|---|---|---|---|---|---|---|
| 15 | A-1 | NMP | - | Water | - | - | - | - | Not dissolved |
| 16 | A-1 | NMP | - | - | EG | Immersion in pure water at 10°C for 24 hours | - | - | Not dissolved |
| 17 | A-1 | NMP | - | Water | EG | Immersion in pure water at 10°C for 24 hours | - | - | Not dissolved |
| 18 | A-1 | NMP | $MgCl_2$ | - | EG | Immersion in pure water at 10°C for 24 hours | 1.1 | 0.74 | After solvent removal, washed with pure water at 90°C for 5 minutes. |
| 19 | A-1 | NMP | - | - | - | Heat-drying at 200°C for 1 hour | 1.0 | - | No water permeability |
| 20 | A-1 | NMP | $MgCl_2$ | - | - | Heat-drying at 200°C for 1 hour | 1.0 | 0.10 | |
| 21 | A-1 | NMP | $MgCl_2$ | Water | - | Heat-drying at 200°C for 1 hour | 1.0 | 0.13 | |
| 22 | A-1 | NMP | $MgCl_2$ | Water | EG | Heat-drying at 200°C for 1 hour | 1.0 | 0.25 | |
| 23 | A-1 | NMP | $MgCl_2$ | - | EG | Heat-drying at 200°C for 1 hour | 1.0 | 0.24 | |

Table 5

| Experiment number | Material (A) | Material (B) | Material (C) | Material (D1) | Material (D2) | Solvent removal conditions | Membrane thickness ($\mu$m) | A/B | Remarks |
|---|---|---|---|---|---|---|---|---|---|
| 24 | A-2 | NMP | $MgCl_2$ | Water | EG | Immersion in pure water at 10°C for 24 hours | 1.0 | 0.78 | After solvent removal, washed with pure water at 90°C for 5 minutes. |
| 25 | A-3 | NMP | $MgCl_2$ | Water | EG | Immersion in pure water at 10°C for 24 hours | 1.0 | 0.56 | After solvent removal, washed with pure water at 90°C for 5 minutes. |
| 26 | A-4 | NMP | $MgCl_2$ | Water | EG | Immersion in pure water at 10°C for 24 hours | 1.0 | 0.60 | After solvent removal, washed with pure water at 90°C for 5 minutes. |
| 27 | A-5 | NMP | $MgCl_2$ | Water | EG | Immersion in pure water at 10°C for 24 hours | 1.0 | 0.50 | After solvent removal, washed with pure water at 90°C for 5 minutes. |

Table 6

| Experiment number | Material (A) | Material (B) | Material (C) | Material (D1) | Material (D2) | Solvent removal conditions | Membrane thickness ($\mu$m) | A/B | Remarks |
|---|---|---|---|---|---|---|---|---|---|
| 28 | A-6 | toluene | MgCl$_2$ | Water | EG | Immersion in pure water at 10°C for 24 hours | - | - | Not dissolved |
| 29 | A-7 | NMP | MgCl$_2$ | Water | EG | Immersion in pure water at 10°C for 24 hours | 1.0 | - | No desalting performance (Defects occurred during water permeability test.) |
| 30 | A-8 | NMP | MgCl$_2$ | Water | EG | Immersion in pure water at 10°C for 24 hours | 1.0 | - | After solvent removal, washed with pure water at 90°C for 5 minutes. Due to lack of self-supporting properties, water permeability test was impossible to be performed. |
| 31 | A-9 | NMP | MgCl$_2$ | Water | EG | Immersion in pure water at 10°C for 24 hours | 1.0 | - | After solvent removal, washed with pure water at 90°C for 5 minutes. Due to lack of self-supporting properties, water permeability test was impossible to be performed. |
| 32 | A-10 | DMF/ acetone (1/1) | MgCl$_2$ | Water | EG | Immersion in pure water at 10°C for 24 hours | 1.0 | - | After solvent removal, washed with pure water at 90°C for 5 minutes. Due to lack of self-supporting properties, water permeability test was impossible to be performed. |
| 33 | A-10 | DMF/ acetone (1/1) | MgCl$_2$ | - | - | Immersion in pure water at 10°C for 24 hours | 1.0 | - | After solvent removal, washed with pure water at 90°C for 5 minutes. Due to lack of self-supporting properties, water permeability test was impossible to be performed. |

Table 7

| Experiment number | Material (A) | Material (B) | Material (C) | Material (D1) | Material (D2) | Solvent removal conditions | Membrane thickness ($\mu$m) | A/B | Remarks |
|---|---|---|---|---|---|---|---|---|---|
| 34 | A-11 | NMP | $MgCl_2$ | Water | EG | Immersion in pure water at 10°C for 24 hours | 1.1 | 0.58 | After solvent removal, washed with pure water at 90°C for 5 minutes. |
| 35 | A-12 | NMP | $MgCl_2$ | Water | EG | Immersion in pure water at 10°C for 24 hours | 1.0 | 0.62 | After solvent removal, washed with pure water at 90°C for 5 minutes. |
| 36 | A-1 | NMP | $MgCl_2$ | Water | EG | Immersion in pure water at 10°C for 24 hours | 1.1 | 0.35 | After solvent removal, washed with pure water at 90°C for 5 minutes. |
| 37 | A-1 | NMP | $MgCl_2$ | Water | EG | Immersion in pure water at 10°C for 24 hours | 1.0 | 0.80 | After solvent removal, washed with pure water at 90°C for 5 minutes. |

Table 8

| Number | Chemical structure |
|---|---|
| A-1 | Meta-substituted linear aromatic polyamide |
| A-2 | Meta-substituted linear aromatic polyamide (introduction rate of Cl group into benzene rings: 10 mol%) |
| A-3 | Nylon 66 |
| A-4 | Polyamide-imide |
| A-5 | Polyimide |
| A-6 | Polystyrene |
| A-7 | Polystyrene sulfonic acid |
| A-8 | Polyester |
| A-9 | Polyketone |
| A-10 | Cellulose triacetate |
| A-11 | Polysulfone |
| A-12 | Polyethersulfone |
| A-13 | Meta-substituted linear aromatic polyamide (containing 10% of carboxylic acid group) |

Table 9

| Experiment number | Material (A) | Cross-rink $\alpha$ | Cross-rink $\beta$ | Material (D1) | Material (D2) | A/B |
|---|---|---|---|---|---|---|
| 38 | A-1 | Not formed | Not formed | - | - | No water permeability |
| 39 | A-1 | Formed | Not formed | - | - | 0.10 |
| 40 | A-1 | Formed | Formed | - | - | 0.35 |
| 41 | A-1 | Formed | Formed | Water | - | 5 |
| 42 | A-1 | Formed | Formed | Water | EG | 8 |
| 43 | A-1 | Formed | Formed | Methanol | - | 10 |
| 44 | A-1 | Not formed | Formed | - | - | 0.30 |
| 45 | A-1 | Not formed | Formed | Water | - | 0.40 |
| 46 | A-1 | Not formed | Formed | Water | EG | 0.60 |
| 47 | A-13 | Not formed | Not formed | - | - | 0.05 |
| 48 | A-13 | Formed | Not formed | - | - | 0.20 |
| 49 | A-13 | Formed | Formed | - | - | 0.45 |
| 50 | A-13 | Formed | Formed | Water | - | 12 |
| 51 | A-13 | Formed | Formed | Water | EG | 20 |
| 52 | A-13 | Formed | Formed | Methanol | - | 18 |
| 53 | A-13 | Not formed | Formed | - | - | 0.54 |
| 54 | A-13 | Not formed | Formed | Water | - | 0.78 |
| 55 | A-13 | Not formed | Formed | Water | EG | 0.90 |

Table 10

| Experiment number | Peak value (cm⁻¹) | Cross-rink β |
|---|---|---|
| 38 | 1653 | Not formed |
| 44 | 1667 | Formed |
| 42 | 1668 | Formed |
| 47 | 1653 | Not formed |
| 53 | 1668 | Formed |
| 55 | 1670 | Formed |

Table 11

| Experiment number | Amount of magnesium in membrane (% by mass) |
|---|---|
| 38 | Below detection limit |
| 47 | Below detection limit |
| 42 | 1.2 |
| 44 | 0.4 |
| 53 | 0.4 |
| 55 | 0.5 |

Table 12

| Experiment number | Endothermic heat flux (mcal/sec) | Melting point of water (°C) |
|---|---|---|
| 38 | 1.1 | 0 |
| 45 | 13.5 | -0.2 |
| 41 | 16.5 | -0.5 |
| 47 | 1.5 | 0 |
| 54 | 16.7 | -0.3 |
| 50 | 20.1 | -0.7 |

**Claims**

1. A process for producing a semipermeable membrane, the process comprising
   the step of forming a liquid membrane from a membrane-forming solution containing materials (A) to (C),

   material (A) being a polymer having a repeating unit structure comprising one or more kinds of structural moieties selected from the group consisting of an amide group, an imide group, a sulfonyl group, and a heterocyclic ring,
   material (B) being a good solvent for material (A),
   material (C) being a salt, and

   the step of removing the solvent from the liquid membrane.

2. The process for producing a semipermeable membrane according to claim 1, wherein the membrane-forming solution further contains material (D),
   material (D) being one or more kinds of low-molecular weight compounds selected from the group consisting of water and low-molecular weight compounds comprising at least one or more kinds of hydrophilic groups selected from the group consisting of a hydroxy group and a salt thereof, an amino group and a salt thereof, a carboxyl group and a salt and an anhydride thereof, a sulfo group and a salt and an anhydride thereof, and a phosphate group and a salt and an anhydride thereof.

3. The process for producing a semipermeable membrane according to claim 1 or 2, wherein the solvent removal step comprises bringing the liquid membrane into contact with any of the following:

    (1) water,
    (2) a monohydric or higher hydric alcohol,
    (3) a mixture of water and a monohydric or higher hydric alcohol, or
    (4) a mixture of material (B) with either water or a monohydric or higher hydric alcohol.

4. The process for producing a semipermeable membrane according to claim 1 or 2, wherein the solvent removal step comprises removing material (B) from the liquid membrane by drying.

5. The process for producing a semipermeable membrane according to any of claims 1 to 4, further comprising the step of washing the formed semipermeable membrane with hot water.

6. The process for producing a semipermeable membrane according to any of claims 1 to 5, wherein the membrane-forming solution contains, as material (A), at least one or more kinds of polymers selected from the group consisting of polyamides, polybenzimidazoles, polyamide-imides, polyimides, polysulfones, and polyethersulfones.

7. The process for producing a semipermeable membrane according to any of claims 1 to 6, wherein the membrane-forming solution contains, as material (A), a polymer comprising either a hydrophilic group or a halogen atom.

8. The process for producing a semipermeable membrane according to any of claims 1 to 7, wherein the membrane-forming solution contains an aromatic polyamide as material (A).

9. The process for producing a semipermeable membrane according to any of claims 1 to 8, wherein the membrane-forming solution contains a meta-substituted aromatic polyamide as material (A).

10. The process for producing a semipermeable membrane according to any of claims 1 to 9, wherein the membrane-forming solution contains one or more kinds of mono- or divalent inorganic salts as material (C).

11. The process for producing a semipermeable membrane according to any of claims 1 to 10, wherein the amount of material (C) in the membrane-forming solution is 0.1% by weight to 20% by weight.

12. The process for producing a semipermeable membrane according to any of claims 1 to 11, wherein the amount of material (D) in the membrane-forming solution is 0.001% by weight to 40% by weight.

13. The process for producing a semipermeable membrane according to any of claims 1 to 12, wherein the membrane-forming solution contains, as material (D), at least one or more kinds of materials selected from water, diols, triols, and dicarboxylic anhydrides.

14. The process for producing a semipermeable membrane according to any of claims 1 to 13, wherein the membrane-forming solution contains, as material (D), a polymer having a repeating unit having a hydrophilic group or a salt or an anhydride thereof.

15. The process for producing a semipermeable membrane according to any of claims 1 to 14, wherein the membrane-forming solution contains a polymer having a number average degree of polymerization of 500 or less as material (D).

16. A semipermeable membrane obtained by forming a liquid membrane from a membrane-forming solution containing materials (A) to (D), removing a solvent, and subjecting the membrane to cross-linking to allow the membrane to contain two kinds of cross-links $\alpha$ and $\beta$,
wherein material (A) is a polymer having a repeating unit structure comprising one or more kinds of structural moieties selected from the group consisting of an amide group, an imide group, a sulfonyl group, and a heterocyclic ring, material (B) is a good solvent for material (A), material (C) is a salt, and material (D) is one or more kinds of low-molecular weight compounds selected from the group consisting of water and low-molecular weight compounds comprising at least one or more kinds of hydrophilic groups selected from the group consisting of a hydroxy group and a salt thereof, an amino group and a salt thereof, a carboxyl group and a salt and an anhydride thereof, a sulfo group and a salt and an anhydride thereof, and a phosphate group and a salt and an anhydride thereof, and

wherein cross-link α is a covalent bond with a nitrogen atom contained in material (A), and

cross-link β is an ionic bond between an oxygen or nitrogen atom or a hydrophilic group contained in material (A) and a cation derived from material (C).

17. The semipermeable membrane according to claim 16, wherein material (A) is a polymer having a repeating unit structure comprising one or more kinds of structural moieties selected from the group consisting of an amide group, an imide group, and a heterocyclic ring.

18. The semipermeable membrane according to claim 16, wherein material (A) is a polyamide or a polybenzimidazole.

19. The semipermeable membrane according to claim 16, wherein material (A) is a polyamide.

20. The semipermeable membrane according to claim 16, wherein material (A) is a meta-substituted polyamide.

21. The semipermeable membrane according to claim 16, wherein material (A) is a meta-substituted linear polyamide.

22. The semipermeable membrane according to any of claims 16 to 21, wherein material (A) comprises a hydrophilic group selected from a hydroxy group, a carboxyl group, a sulfo group, and a phosphate group, and salts thereof.

23. The semipermeable membrane according to any of claims 16 to 22, wherein cross-link α is formed using a polyfunctional melamine compound or divinyl sulfone as a cross-linking agent.

24. The semipermeable membrane according to any of claims 16 to 23, wherein material (C) used for formation of cross-link β is a metal salt.

25. The semipermeable membrane according to any of claims 16 to 24, wherein material (C) used for formation of cross-link β is a divalent or higher valent metal salt.

26. The semipermeable membrane according to any of claims 16 to 25, wherein material (D) is water or an alcohol.

27. The semipermeable membrane according to any of claims 16 to 26, wherein material (D) is water, a diol, or a triol.

28. The semipermeable membrane according to any of claims 16 to 27, wherein material (D) is present in the membrane even after the membrane is washed with hot water at 90°C for 5 minutes.

29. The semipermeable membrane according to any of claims 16 to 28, comprising ethylene glycol as material (D).

30. A process for producing the semipermeable membrane according to any of claims 16 to 29, the process comprising the steps of forming a liquid membrane from a membrane-forming solution containing materials (A) to (D), removing a solvent from the liquid membrane, and forming a cross-link.

# EP 3 085 435 A1

## INTERNATIONAL SEARCH REPORT

International application No.

PCT/JP2014/065456

### A. CLASSIFICATION OF SUBJECT MATTER

*B01D71/56*(2006.01)i, *B01D71/62*(2006.01)i, *B01D71/64*(2006.01)i, *B01D71/68*(2006.01)i, *C08J5/18*(2006.01)i

According to International Patent Classification (IPC) or to both national classification and IPC

### B. FIELDS SEARCHED

Minimum documentation searched (classification system followed by classification symbols)
B01D71/56, B01D71/62, B01D71/64, B01D71/68, C08J5/18

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-34031 A (Toyobo Co., Ltd.),<br>05 February 2004 (05.02.2004),<br>claims; paragraphs [0001], [0009], [0014];<br>examples 1 to 3<br>(Family: none) | 1-3,6-15<br>1-30 |
| X<br>Y | JP 57-159508 A (Nitto Electric Industrial Co.,<br>Ltd.),<br>01 October 1982 (01.10.1982),<br>claims; page 2, upper left column, line 3 to<br>page 6, lower right column, line 8; drawings<br>(Family: none) | 1-3,6-15<br>1-30 |

☒ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>02 September, 2014 (02.09.14) | Date of mailing of the international search report<br>09 September, 2014 (09.09.14) |
|---|---|
| Name and mailing address of the ISA/<br>Japanese Patent Office | Authorized officer |
| Facsimile No. | Telephone No. |

Form PCT/ISA/210 (second sheet) (July 2009)

26

**INTERNATIONAL SEARCH REPORT**

International application No.

PCT/JP2014/065456

C (Continuation).  DOCUMENTS CONSIDERED TO BE RELEVANT

| Category* | Citation of document, with indication, where appropriate, of the relevant passages | Relevant to claim No. |
|---|---|---|
| X<br>Y | JP 2-63535 A  (Toyobo Co., Ltd.),<br>02 March 1990 (02.03.1990),<br>claims; page 1, left column, line 9 to page 5,<br>upper left column, line 11; examples 14 to 16<br>(Family: none) | 1-3,6-15<br>1-30 |
| X<br>Y | JP 2004-105804 A  (Fuji Photo Film Co., Ltd.),<br>08 April 2004 (08.04.2004),<br>claims; paragraphs [0001], [0011], [0012];<br>examples<br>(Family: none) | 1-4,10-15<br>1-30 |
| Y | JP 2008-114181 A  (Mitsubishi Rayon Co., Ltd.),<br>22 May 2008 (22.05.2008),<br>paragraph [0056]<br>(Family: none) | 1-30 |
| Y | JP 2-126925 A  (Mitsubishi Kasei Corp.),<br>15 May 1990 (15.05.1990),<br>page 3, upper right column, lines 4 to 11; page<br>3, lower left column, line 18 to lower right<br>column, line 10; page 4, upper left column,<br>lines 3 to 5<br>(Family: none) | 1-30 |
| Y | JP 63-283705 A  (Director General, Agency of<br>Industrial Science and Technology),<br>21 November 1988 (21.11.1988),<br>page 3, lower left column, lines 11 to 19;<br>examples<br>(Family: none) | 1-30 |

Form PCT/ISA/210 (continuation of second sheet) (July 2009)

## REFERENCES CITED IN THE DESCRIPTION

**Patent documents cited in the description**

- US 3744942 A
- JP 2000017002 A
- US 2011102680 A
- JP 2011255312 A

**Non-patent literature cited in the description**

- **S. LOEB.** *J. Membr. Sci.,* 1976, vol. 1 (49-63), 249-269